# EUROPEAN PATENT SPECIFICATION

(11) **EP 3 032 071 B1**
(45) Date of publication and mention of the grant of the patent: **02.12.2020**
(21) Application number: 15198720.3
(22) Date of filing: 09.12.2015
(51) Int. Cl.: F02C 7/228, F02C 7/232, F02C 9/28, F02C 9/34

(54) **FUEL SCHEDULE FOR ROBUST GAS TURBINE ENGINE TRANSITION BETWEEN STEADY STATES**
BRENNSTOFFPLAN FÜR ROBUSTEN GASTURBINENMOTORÜBERGANG ZWISCHEN BESTÄNDIGEN ZUSTÄNDEN
COMMANDE DE CARBURANT POUR TRANSITION ROBUSTE ENTRE ÉTATS STABLES DE MOTEUR À TURBINE À GAZ

(30) Priority: 10.12.2014 US 201462090225 P
(43) Date of publication of application: 15.06.2016
(73) Proprietor: United Technologies Corporation, Farmington, CT 06032 (US)
(72) Inventor: VAN, Anthony, Palm City, FL Florida 34990 (US); MOURA, Dennis M., South Windsor, CT Connecticut 06074 (US); HOKE, James B., Tolland, CT Connecticut 06084 (US); BUSH, Thomas A., Vernon Rockville, CT Connecticut 06066-5956 (US); GAUDET, Timothy J., Southampton, MA Massachusetts 01073 (US); PINEDO, Victor M., Bridgeport, CT Connecticut 06604 (US); KWOKA, David, South Glastonbury, CT Connecticut 06073 (US); VAN ECK, Matthew G., West Hartford, CT Connecticut 06119 (US)
(74) Representative: Dehns

(56) References cited:
- FR-A1- 2 969 703
- US-A1- 2009 145 131
- US-A1- 2013 255 270

## Description

### Technical Field

This disclosure generally relates to gas turbine engines and, more particularly, relates to a fuel schedule for supplying a combustor.

### Background

Many modern aircraft, as well as other vehicles and industrial processes, employ gas turbine engines for generating energy and propulsion. Such engines include a fan, compressor, combustor and turbine provided in serial fashion, forming an engine core and arranged along a central longitudinal axis. Air enters the gas turbine engine through the fan and is pressurized in the compressor. This pressurized air is mixed with fuel in the combustor. The fuel-air mixture is then ignited, generating hot combustion gases that flow downstream to the turbine. The turbine is driven by the exhaust gases and mechanically powers the compressor and fan via a central rotating shaft. Energy from the combustion gases not used by the turbine is discharged through an exhaust nozzle, producing thrust to power the aircraft.

Gas turbine engines contain an engine core and fan surrounded by a fan case, forming part of a nacelle. The nacelle is a housing that contains the engine. The fan is positioned forward of the engine core and within the fan case. The engine core is surrounded by an engine core cowl and the area between the nacelle and the engine core cowl is functionally defined as a fan duct. The fan duct is substantially annular in shape to accommodate the airflow from the fan and around the engine core cowl. The airflow through the fan duct, known as bypass air, travels the length of the fan duct and exits at the aft end of the fan duct at an exhaust nozzle.

In addition to thrust generated by combustion gasses, the fan of gas turbine engines also produces thrust by accelerating and discharging ambient air through the exhaust nozzle. Various parts of the gas turbine engine generate heat while operating, including the compressor, combustor, turbine, central rotating shaft and fan. To maintain proper operational temperatures, excess heat is often removed from the engine via oil coolant loops, including air/oil or fuel/oil heat exchangers, and dumped into the bypass airflow for removal from the system.

In operation, the gas turbine engine receives fuel from a fuel supply. The fuel is pressurized by a fuel pump, and injected into the combustor of the gas turbine engine via a fuel line. A gas turbine engine may include a plurality of fuel lines. Each of these fuel lines may inject fuel into the combustor at a particular location and orientation.

Each fuel line may inject fuel into the combustor using an atomizer or a jet. The atomizer may provide fuel to the combustor in a form sufficiently atomized for gas turbine transition between steady states in all conditions. To ensure successful gas turbine engine transition in all conditions, differing flow pressures for each fuel line may be called for.

Accordingly, there is a need for an improved fuel schedule for a gas turbine engine.

US 2013/255270 A1 discloses a fuel injection system for providing fuel to primary and secondary fuel nozzles in a gas turbine engine fuel system.

### Summary of the Disclosure

To meet the needs described above and others, the present disclosure provides a gas turbine engine according to claim 1.

The gas turbine engine includes a fuel injection system. The fuel injection system includes a primary fuel line, a secondary fuel line, a dual passage injector, a fuel pump, a fuel supply, a flow divider valve, a flow meter, and a control system adapted to operate in a first fuel delivery mode including a first delta pressure condition between the primary fuel line and the secondary fuel line, the control system adapted to further operate in a second fuel delivery mode including a second delta pressure condition between the primary fuel line and the secondary fuel line, a fuel schedule operated by the control system and employing the first fuel delivery mode during a transition between steady states and subsequently employing the second fuel delivery mode before the gas turbine engine enters a steady state but during the transition.

The first delta pressure condition may have a larger pressure difference than the second delta pressure condition. The flow divider valve is employed to change between the first fuel delivery mode and the second fuel delivery mode. The flow divider valve is a pressure modulator having more than one position and is used to alter a fuel pressure in the secondary fuel line. The transition between steady states may be between an inactive state and a ground idle power state, or may be between a ground idle power state and a higher power state.

The primary fuel line includes an atomizer for injecting a fuel into a combustor, while the secondary fuel line includes a jet for injecting fuel into the combustor. The dual passage injector includes the atomizer of the primary fuel line and the jet of the secondary fuel line for injecting fuel into the combustor.

The gas turbine engine includes a compressor for compressing an airflow, a combustor downstream of the compressor and a turbine downstream of the combustor.

The present disclosure further provides a method of delivering fuel to a gas turbine engine according to claim 5.

There is disclosed a method of scheduling fuel delivery in a gas turbine engine, that comprises operating a flow divider valve in a first fuel delivery mode during a transition between steady states, a first delta pressure condition existing between a primary fuel line and a secondary fuel line in the first fuel delivery mode, and subsequently operating the gas turbine engine in a second fuel delivery mode before the gas turbine engine enters a steady state but during the transition, a second delta pressure condition existing between the primary fuel line and the secondary fuel line in the second fuel delivery mode, the first delta pressure condition having a larger pressure difference than the second delta pressure condition.

These, and other aspects and features of the present disclosure, will be better understood upon reading the following detailed description when taken in conjunction with the accompanying drawings.

### Brief Description of the Drawings

For further understanding of the disclosed concepts and embodiments, reference may be made to the following detailed description, read in connection with the drawings, wherein like elements are numbered alike, and in which:
FIG. 1 is a sectional view of a gas turbine engine constructed in accordance with an embodiment.
FIG. 2 is a side view of a combustor bulkhead and fuel injection system constructed in accordance with an embodiment.
FIG. 3 is schematic representation of the fuel injection system constructed in accordance with an embodiment.
FIG. 4 is a flowchart depicting a sample sequence of actions and events which may be practiced in accordance with an embodiment.
FIG. 5 is a flowchart depicting a process flow according to an embodiment.

It is to be noted that the appended drawings illustrate only exemplary embodiments and are therefore not to be considered limiting with respect to the scope of the disclosure or claims. Rather, the concepts of the present disclosure may apply within other equally effective embodiments. Moreover, the drawings are not necessarily to scale, emphasis generally being placed upon illustrating the principles of certain embodiments.

### Detailed Description

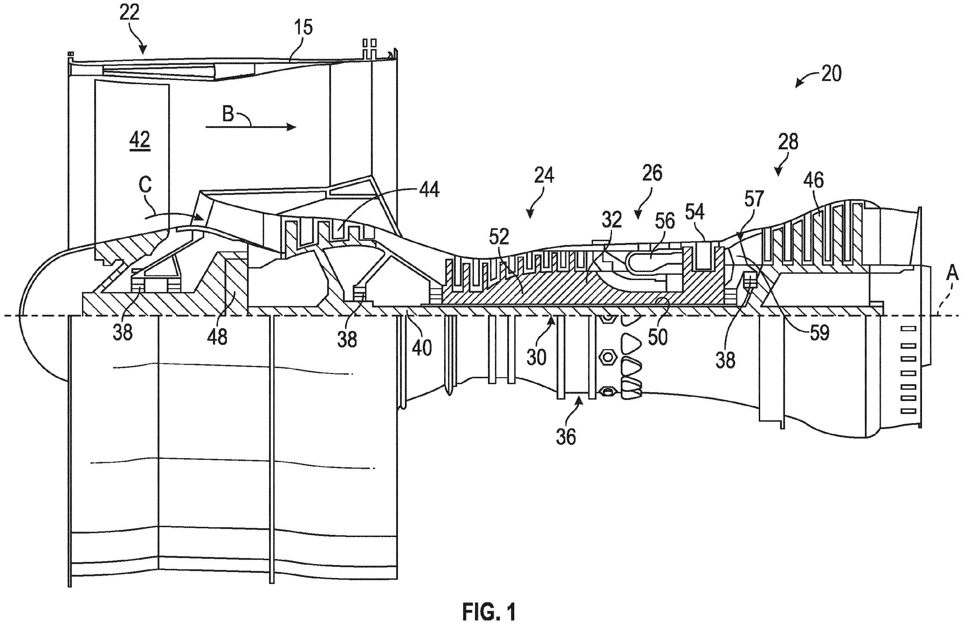

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The gas turbine engine 20 in one example is a high-bypass geared aircraft engine. In a further example, the gas turbine engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the gas turbine engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the gas turbine engine 20 is designed for a particular flight condition -- typically cruise at about 0.8 Mach and about 10668 meters (35000 feet).

The flight condition of 0.8 Mach and: 10668 meters (35000 feet), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in m/sec (ft/sec) divided by an industry standard temperature correction of [(Tram K) / 288,167 K)]^{0.5} ([(Tram °R) / (518.7 °R)]^{0.5} The "Low corrected fan tip speed" as disclosed herein according to one non-limiting embodiment is less than about 350,52 m/sec (1150 ft/sec). The gas turbine engine 20 may further include an RPM sensor 62 for monitoring a rotational speed.

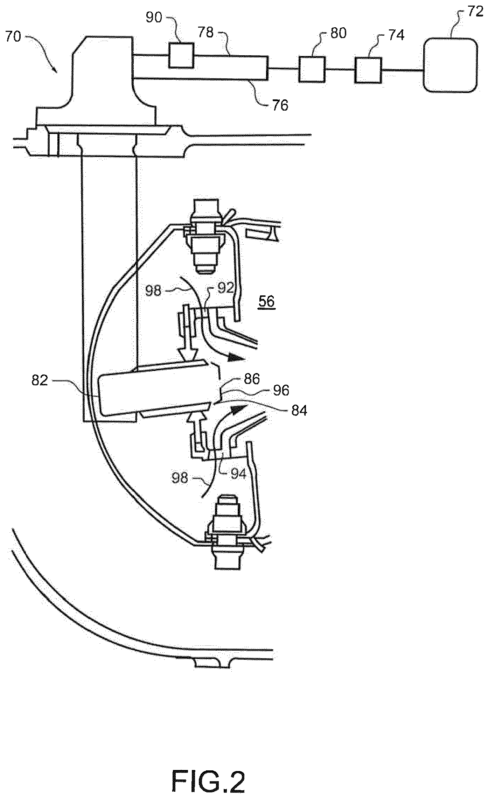

A fuel injection system 70 is used to supply fuel to the combustor 56 as shown in FIG. 2. In operation, the gas turbine engine 20 requires continuous combustion of a fuel-air mixture, and a corresponding continuous supply of fuel. A fuel supply 72 and a fuel pump 74 are in fluid communication with the fuel injection system 70 via a primary fuel line 76 and a secondary fuel line 78. A flow meter 80 is included to monitor a fuel flow rate. The flow meter 80 may be located within or near the fuel supply 72, fuel pump 74 or at another point along the fuel injection system 70.

The fuel injection system 70 may include a fuel injector tip 82 located near the forward end of the combustor 56. The fuel injector tip 82 may include various means for injecting fuel into the combustor 56. The primary fuel line 76 and the secondary fuel line 78 may each travel through, or near, the fuel injector tip 82.

The primary fuel line 76 includes an atomizer 84 for injecting atomized fuel into the combustor 56. The secondary fuel line 78 includes a jet 86 for injecting fuel into the combustor 56. The primary fuel line 76 and the secondary fuel line 78 terminate at the atomizer 84 and the jet 86, respectively. As will be described in detail below, a flow divider valve 90 is also located on the secondary fuel line 78.

The atomizer 84 and jet 86 are both housed in a dual passage injector 96, as shown in FIG. 2. In addition to varying degrees of fuel atomization during injection, the atomizer 84 and jet 86 may each inject fuel into the combustor at a different angle relative to the dual passage injector 96. In particular, the atomizer 84 may inject fuel angled to be immediately combusted within the combustor 56, while the jet 86 may inject fuel angled to interact with an airflow 98 prior to combustion.

For efficient continued combustion, various properties of the injected fuel may be controlled. One of these properties is the size of a fuel droplet injected into the combustor 56. Smaller droplets enable an increased total fuel surface area, aiding combustion efficiency. However, reducing the size of the droplets may introduce disadvantages including an increased pressure requirement, reduced fuel flow or more expensive components. Accordingly, a balance of larger and smaller droplets may be injected to the combustor 56.

During operation, a gas turbine engine 20 may transition between steady states. Steady states may include an inactive state, a ground idle power state and a higher power state. The higher power state may be a bleed air power state, a takeoff power state, a steady flight power state or another steady power state. Alternatively, the gas turbine engine 20 may transition among higher power states. The inactive state may involve the combustor 56 not continually combusting a fuel-air mixture, whereas ground idle power and higher power states may involve the combustor 56 continually combusting a fuel-air mixture.

The smaller droplets may provide fuel to the combustor 56 in a form sufficiently atomized for gas turbine engine 20 transition in all conditions. The atomizer 84 may inject fuel having this smaller droplet size into the combustor 56.

Alternatively, larger droplets may provide fuel to the combustor 56 that requires an interaction with the airflow 98 before being sufficiently atomized for gas turbine engine 20 transitioning in all conditions. This airflow 98, which may come from an air passage 92, may be insufficient prior to transition to guarantee a successful transition. The air passage 92 may be a swirler 94, or another type of vent, hole or passage. The jet 86 may inject fuel into the combustor 56 having this larger droplet size.

To ensure successful gas turbine engine 20 transitioning in all conditions, differing pressures for each fuel line 76, 78 may be called for. One example may involve limiting the pressure in the secondary fuel line 78 during transition, but before the gas turbine engine 20 reaches a steady state.

In limiting the pressure in the secondary fuel line 78, a greater percentage of total fuel injected into the combustor 56 may come through the primary fuel line 76 and atomizer 84 than through the secondary fuel line 78 and jet 86. The greater percentage may be sufficient to allow gas turbine engine 20 transition during all conditions. This fuel delivery configuration may be called a first fuel delivery mode, and it may be understood that this first fuel delivery mode employs a first delta pressure condition as the fuel pressure in the primary and secondary fuel lines 76, 78 differs by a first delta. The flow divider valve 90 is used to change a fuel pressure in the secondary fuel line 78. The flow divider valve 90 is a pressure modulator having more than one position and comprises a solenoid valve.

Another fuel delivery configuration could also limit the pressure in the secondary fuel line 78, and a greater percentage of total fuel injected into the combustor 56 may come through the primary fuel line 76 and atomizer 84 than through the secondary fuel line 78 and jet 86. However, this fuel delivery configuration may be called a second fuel delivery mode, and it may be understood that this second fuel delivery mode employs a second delta pressure condition as the fuel pressure in the primary and secondary fuel lines 76, 78 differs by a second delta. The first delta pressure condition may have a larger pressure difference than the second delta pressure condition. As before, the flow divider valve 90 may be used to change a fuel pressure in the secondary fuel line 78, and the flow divider valve 90 may also be employed to change between the first fuel delivery mode and the second fuel delivery mode.

In another embodiment, the second fuel delivery mode could include equal fuel pressures for the primary and secondary fuel lines 76, 78. That is, the second fuel delivery mode may employ a second delta pressure condition where the pressure in the primary and secondary fuel lines 76, 78 differs by a second delta equal to zero.

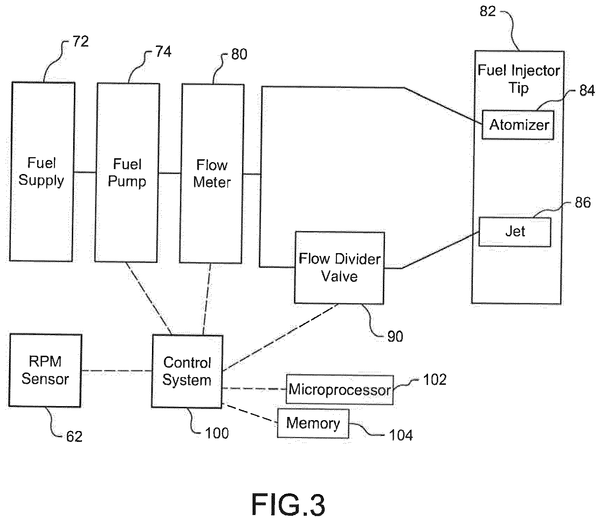

A control system 100, which may include a microprocessor 102 and a memory 104, is in electronic communication with the RPM sensor 62, fuel pump 74, flow meter 80 and flow divider valve 90, as shown in FIG. 3. When operating in either fuel delivery mode, the control system 100 may detect a particular RPM reading from the RPM sensor 62 and a particular fuel flow rate from the flow meter 80. If the RPM reading is too low given the fuel flow rate, the control system 100 may direct the fuel pump 74 to increase the total fuel flow rate to the combustor 56.

When operating in the first fuel delivery mode, the decreased pressure in the secondary fuel line 78 may not allow enough fuel flow to sufficiently fill the secondary fuel line 78. If the secondary fuel line 78 is not sufficiently filled, and an increased fuel flow rate is commanded by the control system 100, the additional fuel supplied will simply fill the secondary fuel line 78 rather than be combusted in the gas turbine engine 20. This may produce an inconsistency between the actual gas turbine engine 20 power output and the expected gas turbine engine 20 power output for the amount of fuel being injected, particularly if a steady state were entered while operating in the first fuel delivery mode. In response to the lack of actual power being produced, the control system 100 may command a still higher fuel flow rate, possibly leading to improper fuel regulation.

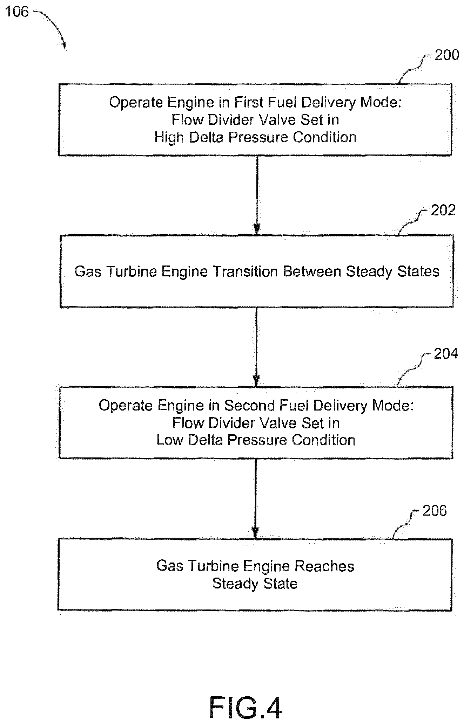

However, operating in the second fuel delivery mode may allow the secondary fuel line 78 to be sufficiently filled, eliminating the filling of the secondary fuel line 78 in response to an increased fuel flow, as shown in FIG. 4. As the first fuel delivery mode may guarantee a successful transition between steady states in all conditions, it may be employed during transition, as shown in block 200. After transition, as shown in block 202, but before the gas turbine engine 20 reaches a steady state, the control system 100 can direct the flow divider valve 90 to employ the second fuel delivery mode, as shown in block 204. This allows successful transition in all conditions, but avoids the possibility of steady state, or increasing power mode, operations with an insufficiently filled secondary fuel line 78, as shown in block 206.

The second delivery mode is employed after the first fuel delivery mode but during the transition and before the gas turbine engine 10 reaches a steady state.

The present disclosure allows for the elimination of individual fuel injector valves, while providing a system and process for successfully transitioning a gas turbine engine 20 in all conditions. The present disclosure also helps avoid operation during a steady state, or increasing power mode, with insufficiently filled secondary fuel line 78. The elimination of individual fuel injector valves may reduce the total complexity and number of parts of the fuel injection system 70. In turn, this reduction may lead to decreased build, acquisition and maintenance costs, reduced system weight and improved system packaging.

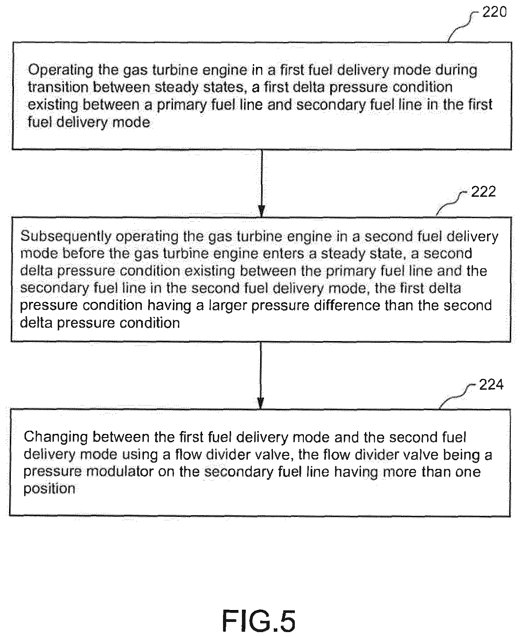

FIG. 5 depicts a method for scheduling fuel delivery in a gas turbine engine and a method of delivering fuel to a gas turbine engine according to an embodiment. The method comprises operating the gas turbine engine in a first fuel delivery mode during transition between steady states, a first delta pressure condition existing between a primary fuel line and a secondary fuel line in the first fuel delivery mode 220, operating the gas turbine engine in a second fuel delivery mode before the gas turbine engine enters a steady state, a second delta pressure condition existing between the primary fuel line and the secondary fuel line in the second fuel delivery mode, the first delta pressure condition having a larger pressure difference than the second delta pressure condition 222, and changing between the first fuel delivery mode and the second fuel delivery mode using a flow divider valve, the flow divider valve being a pressure modulator on the secondary fuel line having more than one position 224.

While the present disclosure has shown and described details of exemplary embodiments, it will be understood by one skilled in the art that various changes in detail may be effected therein without departing from the spirit and scope of the disclosure as defined by claims supported by the written description and drawings. Further, where these exemplary embodiments (and other related derivations) are described with reference to a certain number of elements it will be understood that other exemplary embodiments may be practiced utilizing either less than or more than the certain number of elements.

### Industrial Applicability

In operation, the present disclosure sets forth a fuel delivery schedule for a gas turbine engine which can find industrial applicability in a variety of settings. For example, the disclosure may be advantageously employed by gas turbine engines 10 in aviation, naval and industrial settings. More specifically, the fuel delivery schedule for a gas turbine engine can be used to enable successful transition in all conditions, but avoid the possibility of steady state, or increasing power mode, operations with an insufficiently filled secondary fuel line 78.

The present disclosure allows for the elimination of individual fuel injector valves, while providing a system and process for successfully transitioning a gas turbine engine 20 in all conditions. The elimination of individual fuel injector valves may reduce the total complexity and number of parts of the fuel injection system 70. In turn, this reduction may lead to decreased build, acquisition and maintenance costs, reduced system weight and improved system packaging.

The fuel delivery schedule for a gas turbine engine of the present disclosure contributes to a gas turbine engine's 10 continued and efficient operation. The disclosed system may be original equipment on new gas turbine engines 10, or added as a retrofit to existing gas turbine engines 10.

## Claims

1. A gas turbine engine (20), comprising:
a compressor (24) for compressing an airflow;
a combustor (56) downstream of the compressor (24);
a turbine (28) downstream of the combustor (56);
an RPM sensor (62) for monitoring a rotational speed of the gas turbine engine; and
a fuel injection system (70) comprising:
a primary fuel line (76), wherein the primary fuel line (76) includes an atomizer (84) for injecting fuel into the combustor (56);
a secondary fuel line (78), wherein the secondary fuel line (78) includes a jet (86) for injecting fuel into the combustor (56);
a dual passage injector (96), wherein each of the primary fuel line (76) and the secondary fuel line (78) terminate within the dual passage injector (96) and inject fuel into the combustor (56), the dual passage injector (96) including the atomizer (84) of the primary fuel line (76) and the jet (86) of the secondary fuel line (78);
a fuel pump (74);
a fuel supply (72);
a flow divider valve (90) located on the secondary fuel line (78), wherein the flow divider valve (90) is a solenoid valve having more than one position, and the flow divider valve (90) is used to alter a fuel pressure in the secondary fuel line (78);
a flow meter (80) for monitoring a fuel flow rate; and
a control system (100) in electronic communication with the fuel pump (74), the RPM sensor (62), the flow meter (80) and the flow divider valve (90), the control system (100) adapted to operate the flow divider valve (90) in a first fuel delivery mode including a first delta pressure condition between the primary fuel line (76) and the secondary fuel line (78), the control system (100) adapted to further operate the flow divider valve (90) in a second fuel delivery mode including a second delta pressure condition between the primary fuel line (76) and the secondary fuel line (78);
wherein the control system (100) is adapted to command the flow divider valve (90) to execute a fuel schedule employing the first fuel delivery mode during a transition between steady states and subsequently employing the second fuel delivery mode before the gas turbine engine enters a steady state but during the transition.

2. The fuel injection system (70) of claim 1, wherein the first delta pressure condition has a larger pressure difference than the second delta pressure condition.

3. The fuel injection system (70) of any preceding claim, wherein the transition between steady states is between an inactive state and a ground idle power state.

4. The fuel injection system (70) of any of claims 1 or 2, wherein the transition between steady states is between a ground idle power state and a higher power state.

5. A method of delivering fuel to a gas turbine engine (20), comprising;
injecting fuel into a combustor (56) of the gas turbine engine (20) from a fuel supply (72) using a primary fuel line (76) terminating within a dual passage injector (96), wherein the primary fuel line (76) includes an atomizer (84) for injecting fuel into the combustor (56);
injecting fuel into the combustor (56) of the gas turbine engine (20) from a fuel supply (72) using a secondary fuel line (78) terminating within the dual passage injector (96), wherein the secondary fuel line (78) includes a jet (86) for injecting fuel into the combustor (56);
altering the fuel pressure in the secondary fuel line (78) using a flow divider valve (90), the flow divider valve (90) being a solenoid valve having more than one position;
monitoring a rotational speed of the gas turbine engine using an RPM sensor (62);
monitoring a fuel flow rate using a flow meter (80);
controlling the operation of the flow divider valve (90) using a control system (100), the control system (100) being in electronic communication with the fuel pump (74), RPM sensor (62), the flow meter (80) and the flow divider valve (90);
operating, using the controller system (100), the flow divider valve (90) in a first fuel delivery mode during a transition between steady states, a first delta pressure condition existing between a primary fuel line (76) and a secondary fuel line (78) in the first fuel delivery mode, and
subsequently operating, using the controller system (100), the flow divider valve (90) in a second fuel delivery mode before the gas turbine engine enters a steady state but during the transition, a second delta pressure condition existing between the primary fuel line (76) and the secondary fuel line (78) in the second fuel delivery mode, the first delta pressure condition having a larger pressure difference than the second delta pressure condition.

## Patentansprüche

1. Gasturbinentriebwerk (20), das Folgendes umfasst:
einen Verdichter (24) zum Verdichten eines Luftstroms;
eine Brennkammer (56) stromabwärts des Verdichters (24);
eine Turbine (28) stromabwärts der Brennkammer (56);
einen Drehzahlsensor (62) zum Überwachen einer Drehzahl des Gasturbinentriebwerks; und
ein Brennstoffeinspritzsystem (70), das Folgendes umfasst:
eine primäre Brennstoffleitung (76), wobei die primäre Brennstoffleitung (76) einen Zerstäuber (84) zum Einspritzen von Brennstoff in die Brennkammer (56) beinhaltet;
eine sekundäre Brennstoffleitung (78), wobei die sekundäre Brennstoffleitung (78) eine Düse (86) zum Einspritzen von Brennstoff in die Brennkammer (56) beinhaltet;
eine Doppeldurchlass-Einspritzvorrichtung (96), wobei jede der primären Brennstoffleitung (76) und der sekundären Brennstoffleitung (78) innerhalb der Doppeldurchlass-Einspritzvorrichtung (96) endet und Brennstoff in die Brennkammer (56) einspritzt, wobei die Doppeldurchlass-Einspritzvorrichtung (96) den Zerstäuber (84) der primären Brennstoffleitung (76) und die Düse (86) der sekundären Brennstoffleitung (78) beinhaltet;
eine Brennstoffpumpe (74);
eine Brennstoffzufuhr (72);
ein Durchflussteilerventil (90), das sich an der sekundären Brennstoffleitung (78) befindet, wobei das Durchflussteilerventil (90) ein Magnetventil ist, das mehr als eine Stellung aufweist, und das Durchflussteilerventil (90) verwendet wird, um einen Brennstoffdruck in der sekundären Brennstoffleitung (78) zu verändern;
einen Durchflussmesser (80) zum Überwachen einer Brennstoffdurchflussmenge; und
ein Steuersystem (100) in elektronischer Kommunikation mit der Brennstoffpumpe (74), dem Drehzahlsensor (62), dem Durchflussmesser (80) und dem Durchflussteilerventil (90), wobei das Steuersystem (100) ausgelegt ist, um das Durchflussteilerventil (90) in einem ersten Brennstoffabgabeabgabemodus zu betreiben, der eine erste Deltadruckbedingung zwischen der primären Brennstoffleitung (76) und der sekundären Brennstoffleitung (78) beinhaltet, wobei das Steuersystem (100) ausgelegt ist, um das Durchflussteilerventil (90) ferner in einem zweiten Brennstoffabgabemodus zu betreiben, der eine zweite Deltadruckbedingung zwischen der primären Brennstoffleitung (76) und der sekundären Brennstoffleitung (78) beinhaltet;
wobei das Steuersystem (100) ausgelegt ist, um dem Durchflussteilerventil (90) zu befehlen, einen Brennstoffplan unter Einsatz des ersten Brennstoffabgabemodus während eines Übergangs zwischen beständigen Zuständen und unter anschließendem Einsatz des zweiten Brennstoffabgabemodus auszuführen, bevor das Gasturbinentriebwerk in einen beständigen Zustand eintritt, jedoch während des Übergangs.

2. Brennstoffeinspritzsystem (70) nach Anspruch 1, wobei die erste Deltadruckbedingung eine größere Druckdifferenz als die zweite Deltadruckbedingung aufweist.

3. Brennstoffeinspritzsystem (70) nach einem der vorhergehenden Ansprüche, wobei der Übergang zwischen beständigen Zuständen zwischen einem inaktiven Zustand und einem Boden-Leerlauf-Leistungszustand erfolgt.

4. Brennstoffeinspritzsystem (70) nach einem der Ansprüche 1 oder 2, wobei der Übergang zwischen beständigen Zuständen zwischen einem Boden-Leerlauf-Leistungszustand und einem höheren Leistungszustand erfolgt.

5. Verfahren zum Abgeben von Brennstoff an ein Gasturbinentriebwerk (20), das Folgendes umfasst:
Einspritzen von Brennstoff in eine Brennkammer (56) des Gasturbinentriebwerks (20) von einer Brennstoffzufuhr (72) unter Verwendung einer primären Brennstoffleitung (76), die innerhalb einer Doppeldurchlass-Einspritzvorrichtung (96) endet, wobei die primäre Brennstoffleitung (76) einen Zerstäuber (84) zum Einspritzen von Brennstoff in die Brennkammer (56) beinhaltet;
Einspritzen von Brennstoff in die Brennkammer (56) des Gasturbinentriebwerks (20) von einer Brennstoffzufuhr (72) unter Verwendung einer sekundären Brennstoffleitung (78), die innerhalb der Doppeldurchlass-Einspritzvorrichtung (96) endet, wobei die sekundäre Brennstoffleitung (78) eine Düse (86) zum Einspritzen von Brennstoff in die Brennkammer (56) beinhaltet;
Verändern des Brennstoffdrucks in der sekundären Brennstoffleitung (78) unter Verwendung eines Durchflussteilerventils (90), wobei das Durchflussteilerventil (90) ein Magnetventil ist, das mehr als eine Stellung aufweist;
Überwachen einer Drehzahl des Gasturbinentriebwerks unter Verwendung eines Drehzahlsensors (62);
Überwachen einer Brennstoffdurchflussmenge unter Verwendung eines Durchflussmessers (80);
Steuern des Betriebs des Durchflussteilerventils (90) unter Verwendung eines Steuersystem (100), wobei das Steuersystem (100) in elektronischer Kommunikation mit der Brennstoffpumpe (74), dem Drehzahlsensor (62), dem Durchflussmesser (80) und dem Durchflussteilerventil (90) steht;
Betreiben, unter Verwendung des Steuersystems (100), des Durchflussteilerventils (90) in einem ersten Brennstoffabgabemodus während eines Übergangs zwischen beständigen Zuständen, wobei eine erste Deltadruckbedingung zwischen einer primären Brennstoffleitung (76) und einer sekundären Brennstoffleitung (78) in dem ersten Brennstoffabgabemodus vorliegt, und
anschließendes Betreiben, unter Verwendung des Steuersystems (100), des Durchflussteilerventils (90) in einem zweiten Brennstoffabgabemodus, bevor das Gasturbinentriebwerk in einen beständigen Zustand eintritt, jedoch während des Übergangs, wobei eine zweite Deltadruckbedingung zwischen der primären Brennstoffleitung (76) und der sekundären Brennstoffleitung (78) in dem zweiten Brennstoffabgabemodus vorliegt, wobei die erste Deltadruckbedingung eine größere Druckdifferenz als die zweite Deltadruckbedingung aufweist.

## Revendications

1. Moteur à turbine à gaz (20), comprenant :
un compresseur (24) pour comprimer un écoulement d'air ;
une chambre de combustion (56) en aval du compresseur (24) ;
une turbine (28) en aval de la chambre de combustion (56) ;
un capteur de régime (62) pour surveiller une vitesse de rotation du moteur à turbine à gaz ; et
un système d'injection de carburant (70) comprenant :
une conduite de carburant primaire (76), dans lequel la conduite de carburant primaire (76) comporte un atomiseur (84) pour injecter du carburant dans la chambre de combustion (56) ;
une conduite de carburant secondaire (78), dans lequel la conduite de carburant secondaire (78) comporte un gicleur (86) pour injecter du carburant dans la chambre de combustion (56) ;
un injecteur à double passage (96), dans lequel chacune de la conduite de carburant primaire (76) et de la conduite de carburant secondaire (78) se termine à l'intérieur de l'injecteur à double passage (96) et injecte du carburant dans la chambre de combustion (56), l'injecteur à double passage (96) comportant l'atomiseur (84) de la conduite de carburant primaire (76) et le gicleur (86) de la conduite de carburant secondaire (78) ;
une pompe à carburant (74) ;
une alimentation en carburant (72) ;
un clapet diviseur d'écoulement (90) situé sur la conduite de carburant secondaire (78), dans lequel le clapet diviseur d'écoulement (90) est une électrovanne ayant plus d'une position, et le clapet diviseur d'écoulement (90) est utilisé pour modifier une pression de carburant dans la conduite de carburant secondaire (78) ;
un débitmètre (80) pour surveiller un débit de carburant ; et
un système de contrôle (100) en communication électronique avec la pompe à carburant (74), le capteur de régime (62), le débitmètre (80) et le clapet diviseur d'écoulement (90), le système de contrôle (100) étant conçu pour faire fonctionner le clapet diviseur d'écoulement (90) dans un premier mode de distribution de carburant comportant une première condition de pression delta entre la conduite de carburant primaire (76) et la conduite de carburant secondaire (78), le système de contrôle (100) étant conçu pour faire fonctionner en outre le clapet diviseur d'écoulement (90) dans un second mode de distribution de carburant comportant une seconde condition de pression delta entre la conduite de carburant primaire (76) et la conduite de carburant secondaire (78) ;
dans lequel le système de contrôle (100) est conçu pour commander au clapet diviseur d'écoulement (90) d'exécuter une commande de carburant utilisant le premier mode d'alimentation en carburant pendant une transition entre des états stables et utilisant ultérieurement le second mode d'alimentation en carburant avant que le moteur à turbine à gaz entre dans un état stable mais pendant la transition.

2. Système d'injection de carburant (70) selon la revendication 1, dans lequel la première condition de pression delta a une différence de pression plus grande que la seconde condition de pression delta.

3. Système d'injection de carburant (70) selon une quelconque revendication précédente, dans lequel la transition entre des états stables se fait entre un état inactif et un état d'alimentation de ralenti sol.

4. Système d'injection de carburant (70) selon l'une quelconque des revendications 1 ou 2, dans lequel la transition entre des états stables se fait entre un état d'alimentation de ralenti sol et un état d'alimentation plus élevée.

5. Procédé de distribution de carburant à un moteur à turbine à gaz (20), comprenant ;
l'injection de carburant dans une chambre de combustion (56) du moteur à turbine à gaz (20) à partir d'une alimentation en carburant (72) à l'aide d'une conduite de carburant primaire (76) se terminant à l'intérieur d'un injecteur à double passage (96), dans lequel la conduite de carburant primaire (76) comporte un atomiseur (84) pour injecter du carburant dans la chambre de combustion (56) ;
l'injection de carburant dans la chambre de combustion (56) du moteur à turbine à gaz (20) à partir d'une alimentation en carburant (72) à l'aide d'une conduite de carburant secondaire (78) se terminant à l'intérieur de l'injecteur à double passage (96), dans lequel la conduite de carburant secondaire (78) comporte un gicleur (86) pour injecter du carburant dans la chambre de combustion (56) ;
la modification de la pression de carburant dans la conduite de carburant secondaire (78) à l'aide d'un clapet diviseur de débit (90), le clapet diviseur de débit (90) étant une électrovanne ayant plus d'une position ;
la surveillance d'une vitesse de rotation du moteur à turbine à gaz à l'aide d'un capteur de régime (62) ;
la surveillance d'un débit de carburant à l'aide d'un débitmètre (80) ;
le contrôle du fonctionnement du clapet diviseur de débit (90) à l'aide d'un système de contrôle (100), le système de contrôle (100) étant en communication électronique avec la pompe à carburant (74), le capteur de régime (62), le débitmètre (80) et le clapet diviseur de débit (90) ;
le fonctionnement, à l'aide du système de contrôle (100), du clapet diviseur de débit (90) dans un premier mode de distribution de carburant pendant une transition entre des états stables, une première condition de pression delta existant entre une conduite de carburant primaire (76) et une conduite de carburant secondaire (78) dans le premier mode d'alimentation en carburant, et
le fonctionnement ensuite, à l'aide du système de contrôle (100), du clapet diviseur de débit (90) dans un second mode d'alimentation en carburant avant que le moteur à turbine à gaz entre dans un état stable mais pendant la transition, une seconde condition de pression delta existant entre la conduite de carburant primaire (76) et la conduite de carburant secondaire (78) dans le second mode de distribution de carburant, la première condition de pression delta ayant une différence de pression plus grande que la seconde condition de pression delta.
